Europäisches Patentamt

European Patent Office

Office européen des brevets

(19)

(11) Veröffentlichungsnummer: **0 184 683**
**B1**

(12) **EUROPÄISCHE PATENTSCHRIFT**

(45) Veröffentlichungstag der Patentschrift:
19.07.89

(21) Anmeldenummer: 85114457.6

(22) Anmeldetag: 14.11.85

(51) Int. Cl.⁴: **C 09 D 17/00**, C 09 D 11/02,
**C 08 K 3/04**

(54) **Verfahren zur Herstellung von flüssigen bis pastösen Russpräparationen.**

(30) Priorität: 11.12.84 DE 3445109

(43) Veröffentlichungstag der Anmeldung:
18.06.86 Patentblatt 86/25

(45) Bekanntmachung des Hinweises auf die Patenterteilung: 19.07.89 Patentblatt 89/29

(84) Benannte Vertragsstaaten:
BE DE FR GB IT NL

(56) Entgegenhaltungen:
EP–A– 0 118 721
DE–A– 1 285 486
FR–E– 94 321
US–A– 3 032 430

(73) Patentinhaber: Degussa Aktiengesellschaft
Weissfrauenstrasse 9
D-6000 Frankfurt am Main 1 (DE)

(72) Erfinder: Engel, Richard, Dr.
Veilchenweg 27
D-5303 Bornheim-Waldorf (DE)
Erfinder: Dworowy, Lutz
Auguste-Viktoria-Strasse 44
D-5040 Brühl (DE)

**Beschreibung**

Die Erfindung betrifft ein Verfahren zur Herstellung von flüssigen bis pastösen Rußpräparationen durch Dispergieren einer flüssigkeitshaltigen Vormischung. Es läßt sich gleichermaßen zur Bereitung wäßriger Rußdispersionen wie zur Herstellung von Lack-, Druckfarben- und Weichmacherpasten oder anderen rußhaltigen flüssigen oder pastenförmigen Anwendungssystemen einsetzen.

Bislang wurden derartige Rußpräparationen dadurch gewonnen, daß alle Bestandteile einer Rezeptur vorgemischt und homogenisiert wurden und die erhaltene Vormischung dann in unterschiedlichen Dispergieraggregaten dispergiert wurde. Dabei war es erforderlich, sowohl für die Gewinnung der Vormischung als auch zu deren Dispergierung das jeweils geeignete Gerät einzusetzen, was bei einer größeren Produktpalette eine stark diversifizierte Maschinenausrüstung voraussetzte und eine Automation durch Prozeßregelung sehr erschwerte.

So mußten beispielsweise Vormischungen für niedrigviskose Lackpasten mit einem Zahnscheibendissolver und solche für hochviskose Lackpasten mit einem Planetenmischer hergestellt werden. Im ersteren Fall war als Dispergiervorrichtung ein Dreiwalzenstuhl oder eine Reibspalt-Perlmühle verwendbar, im zweiten Fall mußte die Vormischung über eine Sequenz aus bis zu 3 Dreiwalzenstuhl- und bis zu 2 Perlmühlenpassagen erfolgen.

Hochviskose Druckfarben- und Weichmacherpasten erforderten eine Vormischung im Planetenmischer und ein anschliessendes Dispergieren auf dem Dreiwalzenstuhl in ein- oder mehreren Walzenpassagen.

Niedrigviskose Weichmacherpasten wurden im Planetenmischer vorgemischt und in der Perlmühle dispergiert.

Die Handhabung von organische Lösungsmittel enthaltenden Systemen erforderte bei Vormischungs- und Dispergierschritt aufgrund der weitgehend offenen Maschinensysteme zusätzliche Einrichtungen zur Vermeidung umweltgefährdender Emissionen.

Die Erfindung löst die bestehenden Schwierigkeiten durch die Schaffung eines für die Gewinnung unterschiedlichster Rußpräparationen geeigneten semi-kontinuierlichen Verfahrens mit vereinheitlichter Maschinenausrüstung und auf 2 Stufen begrenzten Arbeitsgängen.

Gegenstand der Erfindung ist ein Verfahren zur Herstellung von flüssigen bis pastösen Rußpräparationen durch Dispergieren einer flüssigkeitshaltigen Vormischung. Das Verfahren ist dadurch gekennzeichnet, daß man den Ruß und die anderen Feststoffe der Rezeptur in einem Intensivmischer mit niedriger Mischleistung anmischt und nach und nach eine Teilmenge der flüssigen Komponenten unter Hochregeln der Mischleistung zudosiert, bis eine rieselfähige, sich trocken anfühlende homogene, bereits knetbare Mischung entstanden is, die erhaltene Vormischung kontinuierlich einem Schneckenkneter zudosiert und in diesem an mehreren Stellen entlang seiner Dispergierstrecke die Restmenge an flüssigen Komponenten in Dosierungen einspeist, welche in jedem Abschnitt dieser Strecke optimale Scherkräfte entfalten läßt.

Das erfindungsgemäße Verfahren kommt also für die verschiedensten Rezepturen von flüssigen bis pastösen Rußpräparationen mit einer Vormischungs- und einer einzigen Dispergierstufe aus, wobei letztere kontinuierlich abläuft.

Repräsentative Rezepturen, welche gemäß der Erfindung in höchster Qualität herstellbar sind, betreffen Rußpräparationen für Anwendungsgebiete, wie

Papier, Pappe leitfähiges Papier, Dispersionsfarben, Kunststoffdispersionen, Latexfarben, Bindefarben, Tusche, wäßrige Flexodruckfarben, Dekor- und Verpackungsdruckfarben, elektrische und antistatische Ausrüstung von Dispersionsklebstoffen und Latex, Viskose — Spinnfasern, Zement, Betonsysteme, Kunststeine, Leichtbauplatten (herstellbar mit wäßrigen Rußdispersionen) ;

Ofentrocknende Kunstharzlacke, lufttrocknende Kunstharzund Öllacke, Abtönpasten für Kunstharz- und Öllacke (herstellbar mit Lackfarbenpasten) ;

Buch- und Offset-Druckfarben, Heat-set-Farben (herstellbar mit Druckfarbenpasten) ;

Weich-PVC, elektrostatische Ausrüstung von PVC-Kabelmassen (herstellbar mit Weichmacherpasten).

So umfaßt z. B. die Rezeptur für eine wäßrige Rußdispersion zur Einfärbung von Baustoffen folgende Bestandteile :

Rezeptur A :

| | |
|---|---|
| Pigmentruß der Klasse RCC (CK3) | 35,0 Gew.% |
| Netzmittel, anionenaktiv | 4,5 Gew.% |
| Äthylenglykol (Stabilisator) | 10,0 Gew.% |
| Permutitwasser | 50,5 Gew.% |

Lackpasten, z. B. für die Herstellung ofentrocknender Kunstharzlacke, können wie folgt zusammengesetzt sein :

2

Rezeptur B :

| | |
|---|---|
| Pigmentruß der Klasse HCC (FW2) | 18,0 Gew.% |
| Sojaöl — Alkydharz | 36,0 Gew.% |
| Lösungsmittel | 46,0 Gew.% |

Druckfarbenpasten sind stets hochviskos. Ein Rezepturbeispiel für die Herstellung farbtiefer Buchdruckfarben ist :

Rezeptur C :

| | |
|---|---|
| Pigmentruß der Klasse RCF (Printex 55) | 50,0 Gew.% |
| Druckfarbenfirnis + Additive | 50,0 Gew.% |

Weichmacherpasten, z. B. für die Einfärbung von Weich-PVC können folgende Zusammensetzung haben :

Rezeptur D :

| | |
|---|---|
| Pigmentruß der Klasse HCC (FW1) | 15,0 Gew.% |
| Weichmacher Dioctylphthalat | 85,0 Gew.% |

Intensivmischer sind Hochleistungsmischer mit Rührorganen in verschiedenartigsten Ausführungen für optimale Mischleistung bei schonender Materialbehandlung. Sofern das Mischsystem nur eine Mischtrommel enthält, ist diese wahlweise kühl- und heizbar. In Gegenwart zweier Mischtrommeln mit meist kaskadenförmiger Anordnung ist eine Trommel kühlbar, die andere heizbar.

Im Rahmen der 2. Stufe des erfindungsgemäßen Verfahrens können alle ein- und mehrwelligen Schneckenkneter verwendet werden. Einwellige Schneckenkneter müssen mit reversierend arbeitender Schnecke ausgerüstet sein, zweiwellige Schneckenkneter weisen gegenläufig rotierende Schnecken auf.

Die Mengenverteilung an den flüssigen Komponenten einer Rezeptur auf die beiden Verfahrensstufen ist produktabhängig und kann in weiten Grenzen liegen. Sie hängt von der jeweils gegebenen Wechselwirkung zwischen vorliegenden Feststoffen und flüssiger Komponente ab und richtet sich im Einzelfall danach, mit welcher Art und Menge an Flüssigkeit die geforderte Konsistenz für die Vormischung (bereits knetbar = gerade erreichter knetbarer Zustand) erreicht wird.

Im Rahmen der Erfindung kann entweder eine Mischung aller flüssigen Rezepturbestandteile auf die erste und zweite Verfahrensstufe aufgeteilt werden oder man ordnet individuelle Rezepturbestandteile in entsprechenden Mengen den beiden Stufen zu. Welcher Weg hierbei eingeschlagen wird, hängt von möglichen Wechselwirkungen zwischen den Rezepturbestandteilen ab.

Nachfolgend werden die auf Vormischungs- und Dispergierstufe entfallenden Anteile der flüssigen Komponente von 4 repräsentativen Rußpräparationen aus der Produktpalette der Anmelderin einander gegenübergestellt :

| Produkt | Flüssigkeitsanteile (Gew.%) [*] | |
|---|---|---|
| | in der Vormischung | in der Dispergierstufe |
| Wäßrige Dispersionen (Bsp. Rezeptur A) | 24,8 | 27,2 |
| Lackfarbenpasten (Bsp. Rezeptur B) | 35 | 47 |
| Druckfarbenpasten (Bsp. Rezeptur C) | 22 | 26 |
| Weichmacherpasten (Bsp. Rezeptur D) | 16,2 | 68,8 |

[*] bezogen auf das Gewicht der Summe der Rezepturbestandteile (Gesamt-Rezeptur)

Der Hauptvorteil des Verfahrens gemäß der Erfindung liegt darin, daß es universell zur Herstellung von flüssigen bis pastösen Rußpräparationen geeignet ist und daß diese Vielseitigkeit mit einer einheitlichen Kombination aus nur 2 Verarbeitungsmaschinen erreicht wird, deren Zusammenwirken überdies leicht automatisierbar ist.

Die erfindungsgemäß erzielbaren Produktqualitäten stehen den nach herkömmlichen Verfahren erhältlichen in nichts nach, sondern übertreffen sie z. T. sogar. Die Produktqualität fällt jedoch in allen Fällen besonders gleichmäßig aus. Das Verfahren ist zudem kostengünstiger und umweltfreundlicher.

Die Erfindung wird nachfolgend anhand von Ausführungsbeispielen weiter erläutert:

## Beispiel 1

Wäßrige Rußdispersion
Rezeptur:
Rußdispersion A:

| | |
|---|---|
| Farbruß Printex 300 | 45,0 Gew.% |
| Stabilisator: | |
| Monoäthylenglykol | 10,0 Gew.% |
| Netzmittel: Vanisperse (Natriumligninsulfonat) | 3,0 Gew.% |
| Permutitwasser | 42,0 Gew.% |

Ausführung:

Zwecks Vormischung werden Ruß und Netzmittel in einem Schnellmischer (Beispiel: Fabrikat Papenmeyer) vorgelegt und dann bei laufendem Mischer portionsweise so lange mit der Permutitwasser/Stabilisator-Lösung versetzt, bis eine rieselfähige, homogene, knetbare Mischung entstanden ist.

Zur Feindispergierung wird die so zubereitete Vormischung in den kontinuierlich arbeitenden Kneter (reversierende Einfachschnecke) dosiert und entlang der Dispergierstrecke mit der Restmenge an Permutitwasser/Stabilisator-Lösung versetzt. Die fertige Rußdispersion verläßt den Kneter nach einer Verweilzeit von 1-2 sec. in der gewünschten Qualität.

| | |
|---|---|
| Qualitätsergebnis: | |
| Grindometerwert ($\mu$m) | < 10 |
| Viskosität nach 12 Tagen (20 °C, mPa.s) | 1 000 |
| Viskosität nach 40 Tagen (20 °C, mPpa.s) | 1 200 |
| Technische Daten: | |
| Spezifische Energieaufnahme (KW/kg) | 0,06 |
| Produkttemperatur am Kneterausgang (°C) | 14 |
| Zugabe der flüssigen Komponenten im Kneter nach 1,4D[*](Gew.%)[**] | 8 |
| im Kneter nach 8,2D (Gew.%) | 9 |

[*] 1,4D bedeutet, daß die Einspeisestelle nach einer Strecke, entsprechend dem 1,4-fachen des Schneckendurchmessers des Kneters angeordnet ist.

[**] bezogen auf die Gesamtrezeptur

## Beispiel 2

Lackpaste

Rezeptur:

| | |
|---|---|
| Lackvorpaste B Farbruß: FW 2 | 18,0 Gew.% |
| Bindemittel: Alfthalat AS 502 (Soja-Alkydharz) | 38,0 Gew.% |
| Lösungsmittel: Kristallöl K30 (Testbenzin) | 44,0 Gew.% |

Ausführung:

Zwecks Vormischung wird der Ruß in einem Schnellmischer (Beispiel: Fabrikat Papenmeyer) vorgelegt und dann bei laufendem Mischer portionsweise so lange mit dem Bindemittel und dem Lösungsmittel im Verhältnis 1:1 versetzt, bis eine rieselfähige, homogene, knetbare Mischung entstanden ist.

Zur Feindispergierung wird die so zubereitete Vormischung in den kontinuierlich arbeitenden Kneter mit reversierender Einfachschnecke dosiert und entlang der Dispergierstrecke mit der Restmenge Bindemittel und Lösungsmittel im rezepturgerechten Mischverhältnis versetzt. Die fertige Lackpaste verläßt den Kneter nach einer Verweilzeit von 1-2 sec. in der gewünschten Qualität.

| | |
|---|---|
| Qualitätsergebnis: | |
| Grindometerwert ($\mu$m) | < 10 |
| Viskosität nach 12 Tagen (20 °C mP.s) | 31 800 |
| Viskosität nach 40 Tagen (20 °C mP.s) | 40 500 |
| Farbtiefe (density) | 3,08 |
| Glanz 20° (Messung mit Single Gloss 4030 Reflektometer) (%) | 90 |

Technische Daten :

| | |
|---|---|
| Spezifische Energieaufnahme (KW/kg) | 0,20 |
| Produkttemperat. am Kneterausgang (°C) | 21 |
| Zugabe der flüssigen Komponenten im Kneter nach 6D (Gew.%)*) | 2,8 |
| 8,2D (Gew.%)*) | 5,6 |
| 9,6D (Gew.%)*) | 10,0 |
| 12D (Gew.%)*) | 37,6 |

*) bezogen auf die Gesamtrezeptur

## Beispiel 3

Druckfarbenpaste

Rezeptur :

| | |
|---|---|
| Druckfarbenpaste C Farbruß : Printex 55 | 50,0 Gew.% |
| Bindemittel : Terlon 3 (Alkydharz) | 25,0 Gew.% |
| Firnis 188 (Druckfarbenfirnis) | 23,0 Gew.% |
| Additiv : Xycloxim FF (Cyclohexanonoxim) | 2,0 Gew.% |

Ausführung :

Zwecks Vormischung werden Ruß und Additiv in einem Schnellmischer (Beispiel : Fabrikat Papenmeyer) vorgelegt und dann bei laufendem Mischer mit dem gesamten Terlon portionsweise versetzt. Dabei entsteht eine rieselfähige, homogene, knetbare Mischung.

Zur Feindispergierung wird die so zubereitete Vormischung in den kontinuierlich arbeitenden Kneter (reversierende Einfachschnecke) dosiert und entlang der Dispergierstrecke mit dem gesamten Firnis versetzt. Die fertige Druckfarbenpaste verläßt den Kneter nach einer Verweilzeit von 2-3 sec. in der gewünschten Qualität.

Qualitätsergebnis :

| | |
|---|---|
| Grindometerwert ($\mu$m) | 10-12 |
| Farbtiefe (density) | 2,9 |

Technische Daten :

| | |
|---|---|
| Spezifische Energieaufnahme (KW/kg) | 0,40 |
| Produkttemperatur am Kneterausgang (°C) | 25 |
| Zugabe des Druckfarbenfirnis im Kneter nach 1D (Gew.%)*) | 6,6 |
| 6D (Gew.%)*) | 6,6 |
| 8D (Gew.%)*) | 6,6 |
| 9,5D (Gew.%)*) | 6,6 |

*) bezogen auf die Gesamtrezeptur

## Beispiel 4

Weichmacherpaste

Rezeptur :
Weichmacherpaste D

| | |
|---|---|
| Farbruß : FW 1 | 15,0 Gew.% |
| Weichmacher : Dioctylphtalat | 85,0 Gew.% |

Ausführung.

Zwecks Vormischung wird der Ruß in einem Schnellmischer (Beispiel : Fabrikat Papenmeyer) vorgelegt und dann bei laufendem Mischer portionsweise so lange mit Weichmacher versetzt, bis eine rieselfähige, homogene, knetbare Mischung entstanden ist.

Zur Feindispergierung wird die so zubereitete Vormischung in den kontinuierlich arbeitenden Kneter (reversierende Schnekke) dosiert und entlang der Dispergierstrecke mit dem restlichen Weichmacher versetzt. Die fertige Weichmacherpaste verläßt den Kneter nach einer Verweilzeit von 1-2 sec. in der gewünschten Qualität.

Qualitätsergebnis :

| | |
|---|---|
| Grindometerwert ($\mu$m) | $\leqslant$ 10 |
| Farbtiefe (density) | 2,87 |
| Viskosität nach 12 Tagen (20 °C, mPa.s) | $2.0 \times 10^5$ |
| Viskosität nach 40 Tagen (20 °C, mPa.s) | $2,1 \times 10^5$ |

Technische Daten :

| | |
|---|---|
| Spezifische Energieaufnahme (KW/kg) | 0,13 |
| Produkttemperatur am Kneterausgang (°C) | 11 |
| Zugabe der restlichen flüssigen Komponente | |
| im Kneter nach 1,4D (Gew.%)*) | 10 |
| 8,2D (Gew.%)*) | 25 |
| 9,6D (Gew.%)*) | 25 |

*) bezogen auf die Gesamtrezeptur

## Patentanspruch

Verfahren zur Herstellung von flüssigen bis pastösen Rußpräparationen durch Dispergieren einer flüssigkeitshaltigen Vormischung, dadurch gekennzeichnet, daß man den Ruß und die anderen Feststoffe der Rezeptur in einem Intensivmischer mit niedriger Mischleistung anmischt und nach und nach eine Teilmenge der flüssigen Komponenten unter Hochregeln der Mischleistung zudosiert, bis eine rieselfähige, sich trocken anfühlende homogene, bereits knetbare Mischung entstanden ist, die erhaltene Vormischung kontinuierlich einem Schneckenkneter zudosiert und in diesen an mehreren Stellen entlang seiner Dispergierstrecke die Restmenge an flüssigen Komponenten in Dosierungen einspeist, welche in jedem Abschnitt dieser Strecke optimale Scherkräfte entfalten läßt.

## Claim

A process for the production of liquid to paste-form carbon black preparations by dispersion of a liquid-containing premix, characterised in that the carbon black and the other solids of the formulation are premixed at low intensity in an intensive mixer and the liquid components are partially added with increasing mixing intensity until a free-flowing, dry-feeling homogeneous and already kneadable mixture is formed, the premix obtained is continuously added to a screw kneader in which the rest of the liquid components IS added at several points along its dispersion zone in quantities which enable optimal shear forces to be developed in each section of this zone.

## Revendication

Procédé pour la fabrication de préparation de noir de carbone, de liquides à pâteuses, par dispersion d'un prémélange contenant du liquide, caractérisé en ce que l'on mélange le noir de carbone et les autres matières solides prévues dans la composition, dans un mélangeur, avec une faible puissance de mélange, et ajoute peu à peu, en réglant vers le haut la puissance du mélange, une quantité partielle des composants liquides ayant l'aspect d'une matière sèche, homogène, déjà triturable, ajoute continuellement en le dosant, le prémélange obtenu dans un triturateur à vis, et introduit dans cet appareil, en plusieurs points le long de son parcours de dispersion, le reste des composants liquides en les dosant, pour déployer dans chaque section de ce parcours, les forces de cisaillement optimales.